Europäisches Patentamt

**European Patent Office**

**Office européen des brevets**

(19)

(11) Publication number: **0 133 040**
**A2**

(12) # EUROPEAN PATENT APPLICATION

(21) Application number: **84305153.3**

(22) Date of filing: **30.07.84**

(51) Int. Cl.⁴: **G 01 C 9/00**
**G 01 C 9/08**

(30) Priority: **30.07.83 GB 8320627**

(43) Date of publication of application:
**13.02.85 Bulletin 85/7**

(84) Designated Contracting States:
**DE FR GB**

(71) Applicant: **BRITISH AEROSPACE PUBLIC LIMITED COMPANY**
**100 Pall Mall**
**London SW1Y 5HR(GB)**

(72) Inventor: **Hughes, David**
**British Aerospace P.L.C. Downshire Way**
**Bracknell Berks, RG12 1QL(GB)**

(74) Representative: **Dowler, Edward Charles et al,**
**British Aerospace Public Limited Company Corporate**
**Patents Department Brooklands Road**
**Weybridge Surrey, KT13 OSJ(GB)**

(54) **Non-gyroscopic attitude sensors.**

(57) Attitude sensors which comprise a casing, an inertia-damped pendulum torsionally linked to an inertia member, and a sensor for measuring the position of the inertia member relative to the casing, are limited in their performance by the dependence of spring rate on wheel torsional friction, *eg* in a vehicle turn, the inertia wheel may follow the inertia-damped pendulum faster than is desired. Performance of these sensors can be improved by using an attitude sensor which comprises a support, a gravity-responsive element and a further element, each element being movable relative to the support and the two elements are coupled such that relative movement of the gravity-responsive element and the support produces corresponding relative movement of the further element and the support, the coupling being such as to sense the difference between the actual relative positions of the two elements and a predetermined relative position of the two elements and in dependence on the difference to apply electrically-generated force pulses to the further element to reduce the difference.

## NON-GYROSCOPIC ATTITUDE SENSORS

This invention relates to non-gyroscopic attitude sensors or 'verticality sensors'.

Patent No. 1,572,559 describes an attitude sensor in which in a casing, an inertia-damped pendulum is torsionally linked to an inertia member and which has a sensor for the measurement of the inertia member position relative to the casing. To reduce friction on the inertia member and pendulum, they and a surrounding fluid are chosen to give near neutral buoyancy. The attitude sensor so described is relatively insensitive to short duration lateral acceleration such that it may be used in a vehicle, mounted well away from the centre of rotation.

Over a finite temperature range the wheels and surrounding fluid cannot maintain equal density and finite load falls upon the bearing means, leading to finite torsional friction in the bearing means. The spring means linking the inertia-damped pendulum to the inertia means must have a spring rate such that the torsional friction will be overcome within a specified offset error, usually equal to or less than $\frac{1}{2}$%. This dependence of spring rate on wheel torsional friction limits performance since in a vehicle turn the inertia wheel will follow the inertia-damped pendulum faster than is desired in some applications.

According to the invention, there is provided an attitude sensor of the kind comprising a support, a gravity-responsive element and a further element each movable relative to said support and coupled so that relative movement of the gravity-responsive element and the support urges corresponding relative movement of the further element and the support, said elements and the coupling therebetween together being such that the response, in terms of relative movement between the further element and the support, is linked with relative movement of the gravity-responsive element and the support by a frequency-dependent response characteristic such that the response is relatively small for vibration and short-term lateral acceleration of the support, the attitude sensor being characterised in that the coupling between said elements comprises electrical means for sensing the difference between the actual relative positions of the two elements and a predetermined relative position of the two elements and, in dependence upon said difference, for applying electrically-generated force pulses to the further element tending to reduce said difference.

Advantageously, said force pulses comprise fixed repetition rate pulses of which the durations depend upon said difference.

It is preferred that said durations should increase with said difference up to a predetermined limit but should be constant with increase in said difference over that limit.

By way of example the gravity-responsive element may comprise a pendulum or the liquid in a liquid-level while the further element may comprise an inertia member mounted for turning movement relative to the support.

In a first embodiment to be described herein, said gravity-responsive element and the further element respectively comprise first and second inertia members each mounted for rotation about the same axis and the first member being slightly unbalanced with respect to the rotation axis to render it gravity-responsive, ie to make it act as a compound pendulum. Meanwhile, the support is in the form of a housing containing the two members and also containing a liquid of a density similar to that of the two members so that they are neutrally buoyant within the liquid and the loading between, and hence also the friction between, the members and the bearings therefor are reduced. Respective position sensors are provided to give signals indicative of the positions of the two members with respect to the housing and the difference between these two signals, which difference is indicative of the difference between the actual relative position of the two members and a predetermined 'normal' relative position of the two, is fed via a limiter to the control input of a variable-duration pulse generator. Pulses from this generator are fed to an electromagnetic device arranged to apply torque pulses to the second member.

In a second embodiment, the gravity-responsive element takes the form of two immiscible liquids of slightly different densities in a liquid-level, the level further comprising a toroidal container for containing the liquids and a capacitive sensor for sensing the position of the interfaces between the two liquids, meanwhile the further element is again a rotatably mounted inertia member. The liquid-level is fixed to the inertia member and the two are supported in a housing also containing a liquid providing, as far as possible, neutral buoyancy for the inertia member/liquid-level combination. As before, a variable-duration pulse generator and an electromagnetic torquing device are used to apply torque pulses to the inertia member. A position sensor may be provided to give an electrical signal indicative of the relative position of the inertia member and housing and hence of housing attitude. However, this signal is not needed for control of the torque pulses since the liquid-level is fixed to the inertia member and hence the capacitive sensor is now able to be arranged to give directly a signal indicative of the difference between the desired and actual relative positions of the inertia member and the liquids in the liquid-level.

For a better understanding of the invention, reference will now be made, by way of example, to the accompanying drawings, in which:-

figure 1 is a sectional view of the first embodiment of an attitude sensor according to the invention,

figure 2 is an electrical block diagram of the figure 1 embodiment,

figure 3 is a sectional view of the second embodiment of the attitude sensor,

figure 4 is an electrical block diagram of the figure 3 embodiment, and

figure 5 is an elevation of a liquid-level used in the figure 3 embodiment.

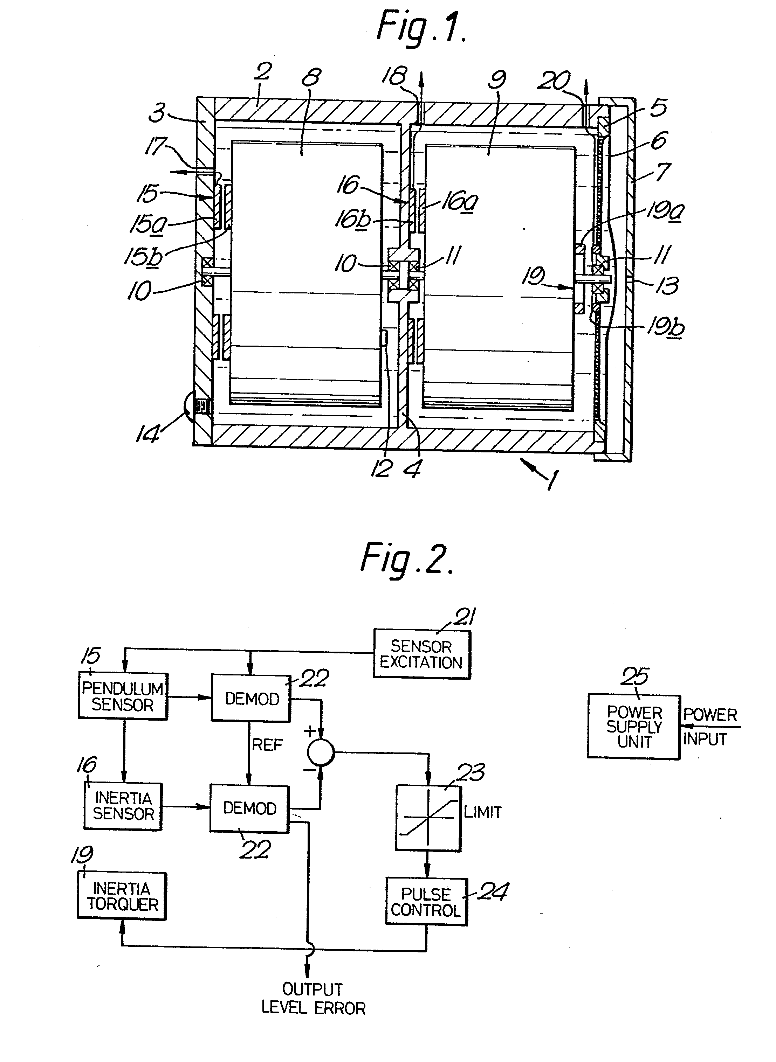

The sensor of figures 1 and 2 comprises a housing 1 made up of a hollow cylindrical part 2 of which one end is closed by an end-plate 3 and, which has a central partition wall 4 dividing the interior of the housing into two substantially equal chambers. The other end of the part 2 is fitted with a perforated end-plate 5 over which there lies a flexible diaphragm 6 and a cover plate 7. Two cylindrical inertia members 8 and 9 are mounted for rotation about the same axis within respective ones of the chambers, the members being supported via stub-shafts in respective bearing sets 10 and 11 carried by the end-plates 3 and 5 and partition wall 4. A small weight 12 is attached to the member 8 at a position about half way along one radius thereof to make the member act like a compound pendulum. The housing 1 is filled with liquid of such density relative to that of the members 8 and 9 that the member 9, and the member 8 apart from the effect of weight 12, are at least nearly neutrally buoyant within the liquid. By way of preferred example, the members 8 and 9 could comprise magnesium alloy extrusions while the liquid could comprise halocarbon oil. Differential expansion of the liquid and housing with variation in temperature is allowed for by flexure of the diaphragm 6 and an air-hole 13 in cover plate 7. The liquid is entered into the housing via a filler hole in end-plate 3 whilst the housing is held with the rotation axis vertical and filler hole uppermost, the hole subsequently being closed by a plug 14.

The positions of the members 8 and 9 relative to the housing are measured by respective electrical sensors 15 and 16 respectively comprising stator elements 15a and 16a fixed to the end-plate 3 and partition wall 4, and the rotor elements 15b and 16b fixed to the members 8 and 9. The sensors may be of any suitable type, for example capacitive or electromagnetic in nature. In any case, however, they are preferably such that the rotor elements are passive, ie the energisation and position signals are applied to and received from the stator elements alone and connections do not have to be made to the rotor elments _via_ slip rings, rotary transformers or the like. For example, in an electromagnetic type of sensor, the stator could comprise one or more coils while the rotor elements incorporate permanent magnets. The connections to the stator elements are led out of the housing _via_ hermetic seals 17 and 18. An electromagnetic torque-applying means 19 is arranged for enabling torque to be applied to the member 9. The torque-applying means includes a rotor 19_a_ fixed to the member 9 and a stator 19_b_ fixed to the end-plate 5. As with the sensors, the rotor 19_a_ of the torque-applying means is passive so that electrical connections only have to be made to the stator 19_b_. These connections are led out of the housing _via_ hermetic seals 20.

As shown in figure 2, the sensors 15 and 16 are excited by an excitation supply circuit 21 which also provides a reference signal to two demodulators 22 which extract, from the outputs of the sensors, the respective components indicative of the positions, relative to the housing 1, of the members 8 and 9. The difference between these two components, which difference is indicative of the divergence between the actual relative position of the two members and the desired, 'normal' relative position, is fed _via_ a limiter 23 to the control input of a torque pulse control device 24 which controls energisation of the torque-applying means 19 to apply to the member 9 torque pulses in a direction tending to reduce the divergence between the actual and desired relative positions of the members 8 and 9, the torque pulses being at a fixed frequency but, up to a predetermined limit of the divergence between the actual and desired relative positions, having durations dependent upon that divergence. By way of example, the pulse repetition rate might be one pulse per second and the pulse duration might vary up to a limit of 10 milliseconds for relative position divergence up to one degree. If the divergence is greater than one degree, the pulse duration remains at the limit value.

The signal formed by the position sensor 16 and associated demodulator, as well as being fed to the element which forms the difference between it and the position signal formed by sensor 15, is taken off as the output signal of the attitude sensor. The attitude sensor may also include a power supply unit 25 for receiving power from an external source (not shown) and providing one or more outputs suitably conditioned for driving the other electrical components of the attitude sensor.

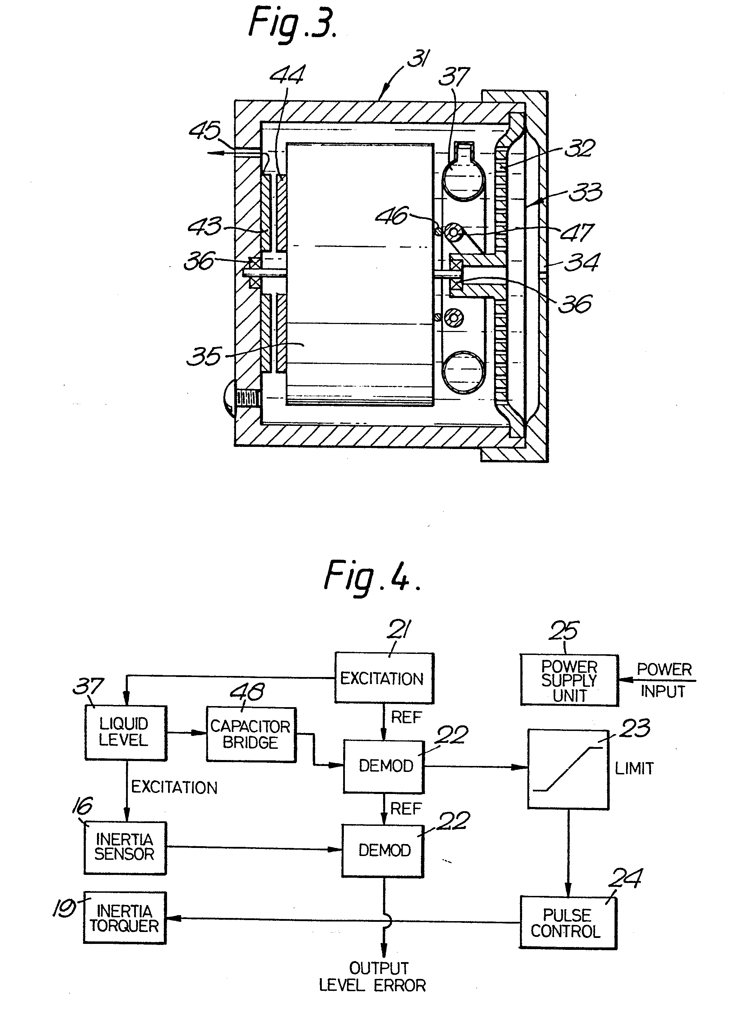

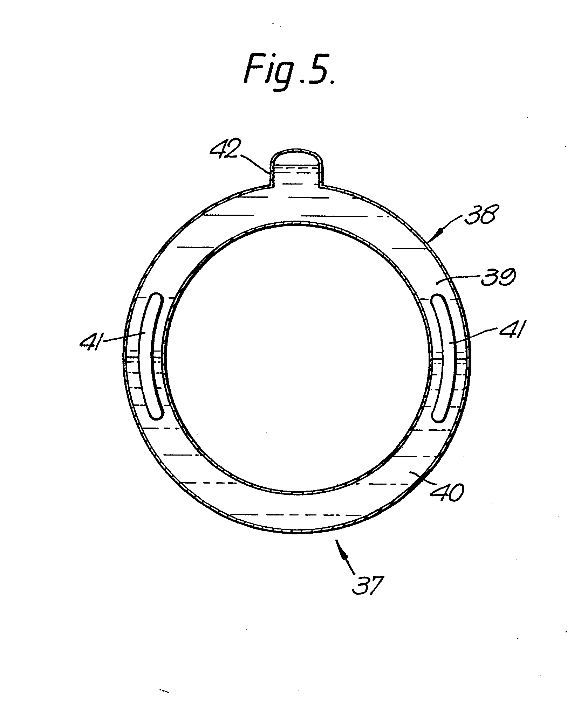

The embodiment of figures 3 to 5 comprises a cup-shaped housing 31 of which the open-end is fitted with a perforated end-plate 32 and closed by a diaphragm 33 over which there lies an end-cap 34 with an air-hole in it. The housing is filled as before with a liquid, the diaphragm serving to allow for differential expansion of the liquid and housing and the liquid providing near neutral buoyancy to the combination of a cylindrical inertia member 35, which member is supported for rotation within the housing via stub-shafts and bearings 36 mounted in the end-plate 32 and the opposite wall of the housing, and of a liquid-level 37 fixed to one end face of the member 35. The liquid-level 37, as shown in figure 5, comprises a toroidal glass container 38 containing two immiscible liquids 39 and 40 of slightly different densities and different dielectric constants. The liquid-level incorporates a position sensor in the form of two capacitors 41 each comprising two plates formed by silvering portions of the internal surface of the container. The positions of the plates and the respective quantities of the two liquids are such that the liquid-level can be positioned with one liquid interface between the plates of one capacitor and the other liquid interface between the plates of the other capacitor. If the level is then rotated so that the interfaces move relative to the respective capacitors, due to the different dielectric constants of the liquids, the capacitances of the two capacitors will vary differentially and can hence be used to provide a signal indicative of the level position. To make the liquid-level, two half-shells can be provided with the silvered capacitor plate portions and wire connections leading from the plates through the shell walls, the shells then being fixed together to form the toroidal container. The two liquids are then inserted via a hole in a filler neck 42 and the hole sealed. A small air-bubble is left within the neck 42 to allow for expansion of the liquids. One of the liquids could comprise a mixture of white spirit and halocarbon oil and the other liquid could be methylated spirits. Due to the different density the two liquids respond to gravity with a characteristic like that of an inertia-damped compound pendulum, the 'pendulosity' being dependent upon the density difference. Depending upon the eventual application of the attitude sensor, it might be desired to construct the liquid-level so that its natural frequency is around 0.1Hz for example.

Between the inertia member and the end wall of the housing there is provided a position sensor combined with one or more rotary transformers including a stator 43 fixed to the housing end wall and a rotor 44 attached to the inertia member, the rotor being passive (as described in relation to figures 1 and 2) and connections to the stator being led out of the housing _via_ a sealed lead-through 45. The function of the rotary transformer(s) is to make electrical connections to the capacitors 41 of the liquid-level. The rotor 46 of an electromagnetic torque-applying means is fixed to the member so as to be encircled by the container of the liquid-level while the torque-applying means stator 47 is fixed to the end-plate. Connections to the stator are led out of the housing _via_ seals (not shown). Like the members 8 and 9 in figure 1, the member may comprise a section cut from a magnesium alloy extrusion and liquid in the housing can again be halocarbon oil.

The connections from the capacitors 41 are led to a capacitance measuring bridge 48 which provides an output signal directly indicative of the divergence between the actual and desired relative positions of the liquids in the liquid-level and the member.

Apart from the fact that, since the bridge 48 directly indicates divergence of actual and desired positions as mentioned above, so there is no need to difference the bridge output and the signal from the position sensor for the member, the electrical arrangement for the embodiment of figures 3 to 5 is similar to that of figures 1 and 2.

In a third embodiment (not shown), there could again be a rotary inertia member and some form of liquid-level, either similar or not

- 10 -

similar to the level used in figures 3 to 5, all mounted in a supporting housing. However, unlike in figures 3 to 5, the level is not fixed to the inertia member. It is then of course necessary to form the difference between the outputs of sensors respectively indicating the relative position of inertia member and housing and the relative positions of the housing and the liquid(s) in the liquid-level which may involve careful design to ensure accurate matching of the sensor characteristics.

In all the attitude sensor embodiments described herein, the or each inertia member could comprise apertures therein to entrain some of the liquid filling the housing of the attitude sensor, this possibly serving to provide increased inertia, in accordance with the principles disclosed in our patent application no. 2,101,326A.

In addition, embodiments in accordance with the present invention could incorporate or be applied to liquid-levels or attitude sensors employing a liquid and float member as disclosed in our patent application no. 8405734.

The use of electrical coupling between the gravity-responsive and inertia elements in the described embodiments may overcome certain limitations of the previously described attitude sensors. As before, a torque is applied to the inertia member to pull it with the gravity-responsive member and effectively the overall amplitude of the torque is still determined by the lag of the inertia element which is in turn dependent upon the torsional friction in the movement of the member but the torque pulse duration can now be limited to attenuate the response of the inertia element to disturbances of the pendulum caused by lateral acceleration. The chosen embodiments further allow applied torque to be limited such that, when the pendulum is perturbed off vertical by more than $1^{o}$ by a prolonged vehicle turn, torque is applied as if the perturbation was only $1^{o}$.

Since the product of torque and time is equal to angular momentum it will be seen that the torsion link of patent no. 1,572,559 is effectively being replaced by momentum-transmitting means.

The embodiment of figures 3 to 5 is favoured except when there is expected severe vibration which might produce emulsification of the two liquids. In those conditions, the embodiment of figures 1 and 2 is preferred.

0133040

- 12 -

## CLAIMS

1.  An attitude sensor of the kind comprising a support, a gravity-responsive element and a further element each movable relative to said support and coupled so that relative movement of the gravity-responsive element and the support urges corresponding relative movement of the further element and the support, said elements and the coupling therebetween together being such that the response, in terms of relative movement between the further element and the support, is linked with relative movement of the gravity-responsive element and the support by a frequency-dependent response characteristic such that the response is relatively small for vibration and short-term lateral acceleration of the support, the attitude sensor being characterised in that the coupling between said elements comprises electrical means for sensing the difference between the actual relative positions of the two elements and a predetermined relative position of the two elements and, in dependence upon said difference, for applying electrically-generated force pulses to the further element tending to reduce said difference.

2.  An attitude sensor according to claim 1, wherein said force pulses comprise fixed repetition rate pulses of which the durations depend upon said difference and said durations increase with said difference up to a predetermined limit and remain constant with increase in said difference over said limit.

3.  An attitude sensor according to claim 1 or 2, wherein said further element is an inertia member mounted for turning movement relative to said support, and said gravity-responsive element is a compound pendulum comprising an inertia member mounted for turning movement relative to said support and slightly unbalanced with respect to the axis about which it can turn so as to render it gravity-responsive.

4.    An attitude sensor according to claim 3, wherein said electrical means comprises two position sensors for providing respective position signals indicative of the positions of said two members with respect to said support, difference forming means for forming a signal indicative of the difference between the two position signals, which difference is indicative of the difference between the actual relative position of said two members and a predetermined 'normal' relative position of the two, and electrical variable-duration pulse generating means having a control input connected to receive said difference signal.

5.    An attitude sensor according to claim 4, wherein each position sensor is an electromagnetic sensor including static coil means fixed to the support and a permanent magnet rotor fixed to the associated inertia member.

6.    An attitude sensor according to claim 1 or 2, wherein said further element is an inertia member mounted for turning movement relative to said support, and said gravity-responsive element is a liquid-level.

7.    An attitude sensor according to claim 6, wherein said liquid-level is fixed to said inertia member, and said liquid-level comprises a toroidal container containing two immiscible liquids of slightly different densities and a capacitive sensor for sensing the position of the interfaces between the two liquids.

8. An attitude sensor according to claim 7, wherein said capacitive sensor is arranged to give directly a signal indicative of the difference between the predetermined relative position and the actual relative position of the inertia member and the liquids in the liquid-level said signal being fed to the control input of a variable-duration pulse generator.

9. An attitude sensor according to claim 4 or 8, wherein said variable-duration pulse generator provides pulses which are fed to an electromagnetic device arranged to apply torque pulses to said further element.

10. An attitude sensor according to any preceding claim, wherein said support is in the form of a housing containing said gravity-responsive element and said further element, said housing also containing a liquid of density similar to that of said elements so that said elements are substantially neutrally buoyant within said liquid.

0133040

1/3

Fig.1.

Fig.2.

SENSOR EXCITATION — 21

PENDULUM SENSOR — 15

DEMOD — 22

INERTIA SENSOR — 16

REF

DEMOD — 22

INERTIA TORQUER — 19

+ / −

LIMIT — 23

PULSE CONTROL — 24

OUTPUT LEVEL ERROR

POWER SUPPLY UNIT — 25

POWER INPUT

2/3

0133040

Fig.3.

Fig.4.

Fig.5.